# FASCICULE DE BREVET EUROPEEN

(11) **EP 3 348 043 B1**
(45) Date de publication et mention de la délivrance du brevet: **18.03.2020**
(21) Numéro de dépôt: 16775786.3
(22) Date de dépôt: 06.09.2016
(51) Int. Cl.: H04L 29/08, H04W 48/20, H04W 64/00, H04W 84/12, H04W 48/16

(54) **PROCÉDÉ ET SYSTÈME D'ÉTABLISSEMENT D'UN ACCÈS À INTERNET PAR UTILISATION D'UN PROTOCOLE DE COMMUNICATION SANS FIL EN RÉSEAU INFORMATIQUE LOCAL À PARTIR D'UNE STATION CLIENTE MOBILE**
VERFAHREN UND SYSTEM ZUR HERSTELLUNG DES INTERNETZUGANGS DURCH DIE VERWENDUNG EINES DRAHTLOSKOMMUNIKATIONSPROTOKOLLS IN EINEM LOKALEN COMPUTERNETZWERK VON EINER MOBILEN CLIENT-STATION
METHOD AND SYSTEM FOR ESTABLISHING INTERNET ACCESS BY USING A WIRELESS COMMUNICATION PROTOCOL IN A LOCAL COMPUTER NETWORK FROM A MOBILE CLIENT STATION

(30) Priorité: 07.09.2015 FR 1558266
(43) Date de publication de la demande: 18.07.2018
(73) Titulaire: Sorbonne Université, 75006 Paris (FR)
(72) Inventeur: PESAVENTO, Davide, 94200 Ivry-sur-Seine (FR); PAU, Gionanni, 75005 Paris (FR); FDIDA, Serge, 94140 Alfortville (FR)
(74) Mandataire: Bonnet, Michel
(86) Numéro de dépôt international: PCT/FR2016/052205
(87) Numéro de publication internationale: WO 2017/042468

(56) Documents cités:
- FR-A1- 2 993 744
- US-A1- 2004 127 252
- US-A1- 2005 138 178

## Description

La présente invention concerne un procédé d'établissement d'un accès à Internet par utilisation d'un protocole de communication sans fil en réseau informatique local à partir d'une station cliente mobile, par l'intermédiaire d'un point d'accès à choisir dans un ensemble de points d'accès à Internet identifiés utilisant ce protocole. Elle concerne également un programme d'ordinateur et un système correspondants.

Par « protocole de communication sans fil en réseau informatique local », on entend un protocole WLAN (de l'anglais « Wireless Local Area Network »).

Plus précisément, l'invention s'applique à un procédé comportant les étapes suivantes :
- prévoir une base de données générale reprenant l'ensemble des points d'accès identifiés avec des informations de connexion propres à chaque point d'accès,
- demander, par la station cliente mobile, un accès à Internet par utilisation dudit protocole, en procédant successivement aux phases suivantes : parcours d'au moins une partie des points d'accès identifiés pour lister ceux détectés comme accessibles par la station cliente mobile ; sélection de l'un des points d'accès listés précédemment ; requête d'une association de la station cliente mobile au point d'accès sélectionné ; authentification de la station cliente mobile auprès du point d'accès qui vient de lui être associé ; configuration de paramètres IP de la station cliente mobile,
- établir l'accès à Internet de la station cliente mobile par l'intermédiaire du point d'accès sélectionné sur la base des paramètres IP configurés.

On connaît des procédés de ce type, notamment ceux mettant en oeuvre l'un des protocoles de communication sans fil en réseau informatique local normalisés par le groupe IEEE 802.11, appelés usuellement protocoles Wi-Fi (marque déposée).

Un tel procédé est par exemple divulgué dans le brevet US 8,665,847 B2 qui porte sur un accès Wi-Fi à Internet à partir d'une station cliente mobile. Il est prévu une base de données générale stockant des valeurs d'attributs de points d'accès Wi-Fi, partiellement téléchargeable localement via Internet dans la station cliente mobile par un mécanisme de cache. Cela signifie précisément que pendant et sous la dépendance d'une étape de demande d'accès à Internet exécutée par la station cliente mobile, certaines données de la base de données générale peuvent être téléchargées en cache lorsqu'elles sont utilisées pour optimiser la phase de sélection d'un point d'accès Wi-Fi. Il en résulte un accès Wi-Fi à Internet optimisé mais pas forcément très rapide.

Un tel procédé est également divulgué dans l'article de Deshpande et al, intitulé « Prédictive methods for improved vehicular WiFi access », publié dans les Proceedings de la conférence MobiSys'09, 22-25 Juin 2009, Kraków (PL). Il porte plus précisément sur un accès Wi-Fi à Internet à partir d'une station cliente mobile embarquée dans un véhicule automobile. Il est prévu que des données relatives à des points d'accès potentiels puissent être téléchargées localement dans la station cliente mobile, notamment par un mécanisme de collecte de données et de cache. Il en résulte également un accès Wi-Fi à Internet optimisé mais pas forcément très rapide.

Un autre document pertinent de l'état de la technique est par exemple le document US2005/0138178 qui divulgue un procédé d'établissement d'un accès à Internet par utilisation d'un protocole de communication sans fil en réseau informatique local à partir d'une station cliente mobile, par l'intermédiaire d'un point d'accès à choisir dans un ensemble de points d'accès à Internet identifiés utilisant ce protocole.

Il peut ainsi être souhaité de prévoir un procédé d'établissement d'un accès à Internet par utilisation d'un protocole de communication sans fil en réseau informatique local à partir d'une station cliente mobile qui permette de s'affranchir d'au moins une partie des problèmes et contraintes précités.

Il est donc proposé un procédé du type précité dans lequel :
- préalablement à l'étape de demande de l'accès à Internet par utilisation dudit protocole et indépendamment de cette étape, il est procédé au téléchargement, par la station cliente mobile, des informations de connexion d'au moins une partie des points d'accès de la base de données générale dans une base de données embarquée de la station cliente mobile, et
- les phases de parcours et de sélection se font à partir des informations de connexion téléchargées préalablement dans la base de données embarquée de la station cliente mobile, sans sollicitation de la base de données générale et des points d'accès identifiés.

Ainsi, en décorrélant dans ce contexte le téléchargement de données issues de la base de données générale des différentes phases de la demande d'accès à Internet, et en supprimant toute sollicitation de la base de données générale et des points d'accès pendant les deux premières phases de la demande d'accès à Internet, on accélère significativement cette dernière.

De façon optionnelle, les informations de connexion propres à chaque point d'accès identifié dans la base de données générale comportent au moins :
- une localisation ou couverture géographique du point d'accès considéré,
- un canal de communication préféré du point d'accès considéré selon ledit protocole, et
- des caractéristiques de performance du point d'accès considéré.

De façon optionnelle également :
- les points d'accès identifiés dans la base de données générale sont répartis dans des classes prédéterminées dont le nombre est strictement inférieur au nombre de points d'accès identifiés,
- la phase de sélection comporte la sélection d'une classe, puis la sélection d'un point d'accès de cette classe parmi les points d'accès listés à partir des informations de connexion téléchargées préalablement dans la base de données embarquée de la station cliente mobile, et
- la sélection d'un point d'accès dans la classe sélectionnée se fait de façon aléatoire, pseudo-aléatoire ou sur la base d'informations de charges des points d'accès listés.

De façon optionnelle également, un procédé d'établissement d'un accès à Internet selon l'invention peut en outre comporter, lorsque l'accès à Internet de la station cliente mobile par l'intermédiaire du point d'accès sélectionné a été établi, les étapes suivantes :
- mesurer des caractéristiques de performance du point d'accès sélectionné sur la base de cet accès établi, et
- transmettre à la base de données générale les caractéristiques de performance mesurées pour une mise à jour.

De façon optionnelle également, les phases d'authentification et de configuration des paramètres IP comportent l'utilisation de paramètres de temporisations qui sont définis de manière à toujours rester inférieurs ou égaux à 5 secondes, en particulier des temps de retours, dits temps de backoff et définis dans la phase de configuration des paramètres IP de manière à rester en outre constants. De façon optionnelle également :
- la phase de configuration des paramètres IP comporte elle-même quatre étapes : diffusion, puis proposition d'adresse IP, puis requête de l'adresse IP proposée, puis acquittement, et
- lors d'une première exécution de cette phase de configuration des paramètres IP dans la demande d'accès, les deux premières étapes de diffusion et de proposition d'adresse IP ne sont pas exécutées, l'étape de requête de l'adresse IP proposée étant basée sur une adresse IP accordée à l'occasion d'une demande d'accès précédente.

De façon optionnelle également, le protocole de communication sans fil en réseau informatique local est l'un de ceux normalisés par le groupe IEEE 802.11.

De façon optionnelle également, la configuration des paramètres IP de la station cliente mobile se fait selon le protocole DHCP.

Il est également proposé un programme d'ordinateur téléchargeable depuis un réseau de communication et/ou enregistré sur un support lisible par ordinateur et/ou exécutable par un processeur, comprenant des instructions pour l'exécution des étapes suivantes d'un procédé d'établissement d'un accès à Internet par utilisation d'un protocole de communication sans fil en réseau informatique local à partir d'une station cliente mobile, par l'intermédiaire d'un point d'accès à choisir dans un ensemble de points d'accès à Internet identifiés utilisant ce protocole, lorsque ledit programme est exécuté sur un processeur de ladite station cliente mobile :
- demander, pour la station cliente mobile, un accès à Internet par utilisation dudit protocole, en procédant successivement aux phases suivantes : parcours d'au moins une partie des points d'accès identifiés pour lister ceux détectés comme accessibles par la station cliente mobile ; sélection de l'un des points d'accès listés précédemment ; requête d'une association de la station cliente mobile au point d'accès sélectionné ; authentification de la station cliente mobile auprès du point d'accès qui vient de lui être associé ; configuration de paramètres IP de la station cliente mobile,
- participer à un établissement de l'accès à Internet de la station cliente mobile par l'intermédiaire du point d'accès sélectionné sur la base des paramètres IP configurés,
ce programme d'ordinateur comportant en outre des instructions pour l'exécution des étapes suivantes :
- préalablement à l'étape de demande de l'accès Internet par utilisation dudit protocole et indépendamment de cette étape, télécharger, pour la station cliente mobile, les informations de connexion d'au moins une partie des points d'accès de la base de données générale dans une base de données embarquée de la station cliente mobile, et
- procéder aux phases de parcours et de sélection à partir des informations de connexion téléchargées préalablement dans la base de données embarquée de la station cliente mobile, sans sollicitation de la base de données générale et des points d'accès identifiés.

Il est également proposé un système pour l'établissement d'un accès à Internet par utilisation d'un protocole de communication sans fil en réseau informatique local à partir d'une station cliente mobile, par l'intermédiaire d'un point d'accès à choisir dans un ensemble de points d'accès à Internet identifiés utilisant ce protocole, le système comportant :
- une base de données générale, accessible par Internet, reprenant l'ensemble des points d'accès identifiés avec des informations de connexion propres à chaque point d'accès,
- au moins une station cliente mobile comportant un processeur et :
   - une base de données embarquée,
   - un gestionnaire de téléchargement, dans sa base de données embarquée, des informations de connexion d'au moins une partie des points d'accès de la base de données générale,
   - un gestionnaire d'accès à Internet programmé pour, lorsqu'il s'exécute, demander un accès à Internet par utilisation dudit protocole, en procédant successivement aux phases suivantes : parcours d'au moins une partie des points d'accès identifiés pour lister ceux détectés comme accessibles par la station cliente mobile ; sélection de l'un des points d'accès listés précédemment ; requête d'une association de la station cliente mobile au point d'accès sélectionné ; authentification de la station cliente mobile auprès du point d'accès qui vient de lui être associé ; configuration de paramètres IP de la station cliente mobile,
- un serveur Internet programmé pour établir l'accès à Internet de la station cliente mobile par l'intermédiaire du point d'accès sélectionné sur la base des paramètres IP configurés,
dans lequel le processeur de la station cliente mobile est en outre programmé pour séquencer les exécutions du gestionnaire de téléchargement et du gestionnaire d'accès à Internet de la façon suivante :
- exécuter le gestionnaire de téléchargement indépendamment de et préalablement à une exécution du gestionnaire d'accès à Internet,
- exécuter le gestionnaire d'accès à Internet en procédant aux phases de parcours et de sélection à partir des informations de connexion téléchargées préalablement dans la base de données embarquée de la station cliente mobile par le gestionnaire de téléchargement, sans sollicitation de la base de données générale et des points d'accès identifiés.

L'invention sera mieux comprise à l'aide de la description qui va suivre, donnée uniquement à titre d'exemple et faite en se référant aux dessins annexés dans lesquels :
- la figure 1 représente schématiquement la structure générale d'un système pour l'établissement d'un accès à Internet par utilisation d'un protocole de communication sans fil en réseau informatique local à partir d'une station cliente mobile, selon un mode de réalisation de l'invention, et
- la figure 2 illustre les étapes successives d'un procédé mis en oeuvre par le système de la figure 1.

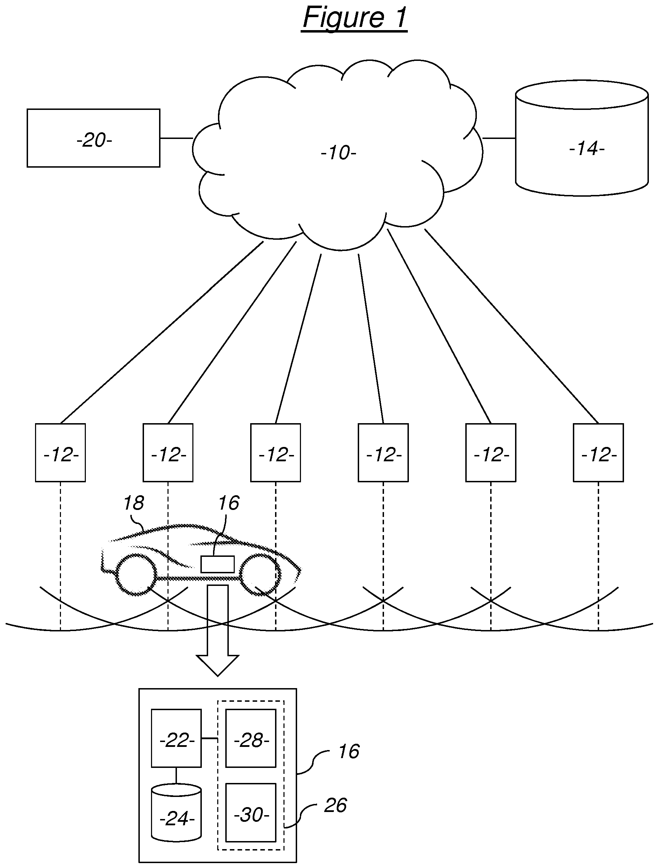

Le système représenté schématiquement sur la figure 1, constitué pour l'établissement d'un accès au réseau Internet (désigné par la référence 10) par utilisation d'un protocole de communication sans fil en réseau informatique local (i.e. un protocole WLAN) à partir d'une ou plusieurs stations clientes, par l'intermédiaire d'un point d'accès à choisir dans un ensemble de points d'accès à Internet identifiés 12 utilisant ce protocole WLAN, comporte :
- une base de données générale 14, accessible par Internet 10, reprenant l'ensemble des points d'accès identifiés 12 avec des informations de connexion propres à chaque point d'accès,
- au moins une station cliente mobile 16, par exemple embarquée dans un véhicule automobile 18, et
- un serveur Internet 20 programmé pour établir l'accès à Internet de la station cliente mobile 16 par l'intermédiaire d'un point d'accès sélectionné dans l'ensemble de points d'accès à Internet identifiés 12 sur la base de paramètres IP (de l'anglais « Internet Protocol ») configurés pour la station cliente mobile 16.

Le protocole WLAN envisagé dans l'exemple illustré sur la figure 1 est par exemple un protocole Wi-Fi du groupe IEEE 802.11. On notera que les points d'accès Wi-Fi de l'ensemble de points d'accès identifiés 12 peuvent être gérés par un ou plusieurs fournisseurs d'accès Wi-Fi à Internet, avec ou sans exigence d'identifiant et mot de passe.

La station cliente mobile 16 telle que représentée schématiquement sur la figure 1, par exemple un ordinateur portable, un téléphone mobile ou tout autre assistant numérique personnel, comporte un processeur 22 associé de façon classique à une mémoire, par exemple une mémoire RAM. Cette mémoire comporte fonctionnellement une base de données embarquée 24 et une zone 26 de stockage de programmes d'ordinateurs 28 et 30 exécutables par le processeur 22. On notera que les programmes d'ordinateurs 28 et 30 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, la station cliente mobile 16 mettant en œuvre le processeur 22 et sa mémoire RAM associée pourrait être remplacée par un dispositif électronique composé uniquement de circuits numériques (sans programme d'ordinateur) pour la réalisation des mêmes actions.

Plus précisément, le programme d'ordinateur 28 remplit une fonction de gestionnaire de téléchargement, dans la base de données embarquée 24, des informations de connexion d'au moins une partie des points d'accès identifiés de la base de données générale 14.

Plus précisément également, le programme d'ordinateur 30 remplit une fonction de gestionnaire d'accès à Internet 10 programmé pour, lorsqu'il s'exécute, demander un accès à Internet par utilisation du protocole Wi-Fi précité, en procédant successivement aux phases suivantes : parcours d'au moins une partie des points d'accès identifiés 12 pour lister ceux détectés comme accessibles par la station cliente mobile 16 ; sélection de l'un des points d'accès listés précédemment ; requête d'une association de la station cliente mobile 16 au point d'accès sélectionné; authentification de la station cliente mobile 16 auprès du point d'accès qui vient de lui être associé; configuration de paramètres IP de la station cliente mobile 16. La dernière phase de configuration peut par exemple se faire selon le protocole DHCP (de l'anglais « Dynamic Host Configuration Protocol ») ou équivalent.

Conformément à l'invention, le processeur 22 est programmé pour séquencer les exécutions du gestionnaire de téléchargement 28 et du gestionnaire 30 d'accès à Internet 10 de la façon suivante :
- exécuter le gestionnaire de téléchargement 28 indépendamment de et préalablement à une exécution du gestionnaire 30 d'accès à Internet 10,
- exécuter le gestionnaire 30 d'accès à Internet 10 en procédant aux phases de parcours et de sélection du protocole Wi-Fi à partir des informations de connexion téléchargées préalablement dans la base de données embarquée 24, sans sollicitation de la base de données générale 14 et des points d'accès identifiés 12.

Le processeur 22 est également programmé de façon connue en soi pour participer à un établissement de l'accès à Internet 10 de la station cliente mobile 16 par l'intermédiaire du point d'accès sélectionné par le gestionnaire 30.

Au cours de cet accès à Internet et de façon optionnelle, des caractéristiques de performance du point d'accès sélectionné peuvent être mesurées, par exemple par le gestionnaire 30 ou par le serveur Internet 20. Ces caractéristiques sont alors avantageusement transmises à la base de données générale 14 pour une mise à jour de ce qu'elle contient comme informations de connexion relatives à ce point d'accès sélectionné. Le système étant adapté pour une sollicitation à chaque instant et de façon simultanée par plusieurs stations clientes mobiles, via plusieurs points d'accès identifiés, cela permet d'assurer une gestion dynamique de tout le contenu de la base de données générale 14 par un apprentissage ou retour d'expériences permanent.

Les informations de connexion de l'ensemble des points d'accès à Internet identifiés 12 dans la base de données générale 14 comportent plus précisément, pour chaque point d'accès, au moins :
- un identifiant, par exemple BSSID (de l'anglais « Basic Service Set IDentifier), du point d'accès Wi-Fi considéré,
- une localisation ou couverture géographique du point d'accès Wi-Fi considéré,
- un canal de communication préféré du point d'accès Wi-Fi considéré lorsqu'il établit une connexion, et
- des caractéristiques de performance du point d'accès Wi-Fi considéré.

Les caractéristiques de performance sont définies selon différentes métriques connues en soi pour indiquer une qualité de service fournie par le point d'accès considéré pour une connexion Wi-Fi. Elles comportent par exemple des temps de parcours RTT (de l'anglais « Round-Trip Time »), des évolutions temporelles de ces RTT, une bande passante estimée, un débit maximal pouvant être atteint, un classement selon plusieurs classes prédéterminées dont le nombre est strictement inférieur au nombre de points d'accès identifiés, etc. Cette liste n'est bien sûr ni exhaustive ni limitative.

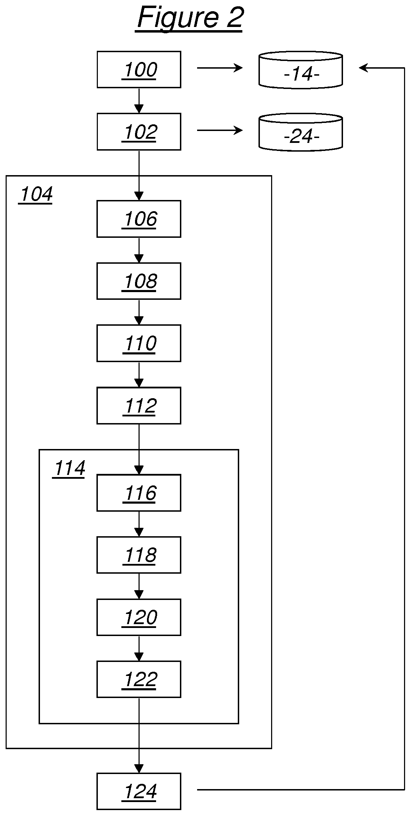

Un exemple de fonctionnement du système de la figure 1 va maintenant être détaillé en référence à la figure 2.

Au cours d'une étape 100 préalable à toute utilisation du système, la base de données générale 14 est créée. Elle reprend un ensemble de points d'accès identifiés 12 susceptibles d'être sollicités par une station cliente mobile quelconque telle que la station cliente 16 embarquée dans le véhicule automobile 18. Elle associe, à chacun de ces points d'accès identifiés 12, des valeurs relatives aux informations de connexion précitées. Elle est accessible par Internet 10 en lecture, pour des téléchargements dans des bases de données embarquées de stations clientes, et en écriture, pour des mises à jour par apprentissage ou retours d'expériences.

Au cours d'une étape 102 préalable à toute demande d'accès Wi-Fi à Internet 10, le gestionnaire de téléchargement 28 est exécuté par le processeur 22 de la station cliente mobile 16 pour le téléchargement, dans la base de données embarquée 24, des informations de connexion d'au moins une partie des points d'accès de la base de données générale 14. Ce téléchargement se fait indépendamment de toute exécution du gestionnaire 30 d'accès à Internet 10.

Dans l'exemple illustré sur la figure 1 où la station cliente mobile 16 est embarquée dans le véhicule automobile 18, cela peut se faire au démarrage du véhicule automobile 18, par exemple lorsqu'un utilisateur définit son trajet sur un ordinateur de bord. Les points d'accès identifiés dans la base de données générale 14 susceptibles d'être accessibles à un moment donné ou un autre du trajet sont alors sélectionnés et leurs informations de connexion téléchargées. La sélection peut également tenir compte d'un fournisseur d'accès Wi-Fi préféré. Le téléchargement peut être exécuté de nouveau à tout moment le long du trajet, notamment lorsque celui-ci est modifié en cours de route.

A un instant donné le long du trajet, le gestionnaire 30 d'accès à Internet 10 de la station cliente mobile 16 demande un accès Wi-Fi à Internet lors d'une étape 104.

Cette étape 104 comporte cinq phases successives identifiées par les références 106, 108, 110, 112 et 114.

La première phase 106 consiste à parcourir au moins une partie des points d'accès identifiés 12 pour lister ceux détectés comme accessibles par la station cliente mobile 16. De manière à accélérer significativement l'accès Wi-Fi, cette phase de parcours 106 se fait avantageusement à partir des informations de connexion téléchargées préalablement dans la base de données embarquée 24. Notamment, en fonction de la localisation géographique de la station cliente mobile 16 au moment où s'exécute cette phase de parcours 106, par exemple obtenue par GPS (de l'anglais « Global Positioning System »), le parcours des points d'accès Wi-Fi accessibles peut être réalisé sans sollicitation de la base de données générale 14 et des points d'accès identifiés 12 par simple comparaison entre la localisation GPS obtenue et les informations de localisations ou couvertures géographiques téléchargées en base de données embarquée 24. Ce parcours peut également être fait à l'avance en associant préalablement des localisations géographiques possibles de la station cliente mobile 16 à des listes de points d'accès accessibles parmi ceux téléchargés lors de l'étape 102.

La deuxième phase 108 consiste à sélectionner l'un des points d'accès listés lors de la phase de parcours 106. De manière à accélérer significativement l'accès Wi-Fi, cette phase de sélection 108 se fait avantageusement à partir des informations de connexion téléchargées préalablement dans la base de données embarquée 24, sans sollicitation de la base de données générale 14 et des points d'accès identifiés 12. Grâce aux caractéristiques de performance précitées notamment, un classement des points d'accès peut être aisément établi, éventuellement même de façon anticipée. Par ailleurs, dans le cas où les points d'accès identifiés dans la base de données générale 14 sont répartis dans des classes prédéterminées dont le nombre est strictement inférieur au nombre de points d'accès identifiés 12, cette phase de sélection 108 peut être encore simplifiée. Elle comporte alors la sélection d'une classe, puis la sélection finale d'un point d'accès de cette classe parmi les points d'accès listés lors de la phase de parcours 106. Pour éviter que des points d'accès très bien classés soient sur-sollicités, la sélection finale se fait avantageusement de façon aléatoire, pseudo-aléatoire (par exemple à l'aide d'un algorithme de hachage) ou sur la base d'informations de charges des points d'accès listés.

La troisième phase 110 consiste à associer la station cliente mobile 16 au point d'accès sélectionné lors de la deuxième phase 108. Cette phase d'association 110 est connue en soi et ne sera pas détaillée. Elle comporte principalement l'émission d'une requête d'association par la station cliente mobile 16 et la réception d'un acquittement émis par le point d'accès sélectionné en réponse à cette requête.

La quatrième phase 112 consiste à authentifier la station cliente mobile 16 auprès du point d'accès qui vient de lui être associé. De façon connue en soi, cette phase d'authentification 112 comporte l'utilisation de paramètres de temporisations. Mais en général, ces temporisations sont de l'ordre de quelques dizaines de secondes, voire de la minute. Conformément à un mode de réalisation avantageux de l'invention, ces temporisations sont réduites de manière à toujours rester inférieures ou égales à 5 secondes. Ainsi, la phase d'authentification 112 est statistiquement accélérée. A titre d'exemple non limitatif, l'authentification peut se faire par protocole EAP (de l'anglais « Extensible Authentication Protocol »).

La cinquième phase 114 consiste à configurer les paramètres IP de la station cliente mobile 16 et autres paramètres classiques de configuration nécessaires à l'établissement d'une connexion à Internet 10. Elle peut se faire selon le protocole DHCP. De façon connue en soi, cette phase de configuration 114 comporte l'utilisation de paramètres de temporisations, en particulier des temps de retours, dits temps de backoff. Mais en général, ces temporisations sont de l'ordre de quelques secondes et les temps de backoff sont à croissance linéaire ou exponentielle. Conformément à un mode de réalisation avantageux de l'invention, ces temporisations sont réduites de manière à toujours rester inférieures ou égales à 500 millisecondes. Les temps de backoff sont quant à eux définis de manière à rester constants. Ainsi, la phase de configuration 114 est statistiquement accélérée.

Plus précisément, par exemple conformément au protocole DHCP, la phase de configuration 114 comporte elle-même quatre étapes : diffusion 116 par la station cliente mobile 16 d'une requête d'adresse IP dans le réseau, puis proposition 118 d'une adresse IP par exemple par le serveur Internet 20, puis requête 120 de l'adresse IP proposée, puis acquittement 122 pour validation de cette adresse IP. De façon connue en soi, cette phase de configuration peut être exécutée plusieurs fois en cas d'échecs successifs. Conformément à un mode de réalisation avantageux de l'invention, lors d'une première exécution de cette phase de configuration 114 dans la demande d'accès 104, les deux premières étapes de diffusion 116 et de proposition d'adresse IP 118 ne sont pas exécutées, l'étape de requête 120 de l'adresse IP proposée pouvant être basée sur une adresse IP accordée à l'occasion d'une demande d'accès précédente. Cette caractéristique tire profit du fait qu'une adresse IP est généralement allouée pour une durée s'étendant au-delà de la durée moyenne d'une connexion Wi-Fi, surtout lorsque celle-ci est obtenue dans le contexte de la figure 1, c'est-à-dire pour la station cliente mobile 16 embarquée dans le véhicule automobile 18. Ainsi, la phase de configuration 114 est statistiquement accélérée.

Suite à l'exécution de la phase de configuration 114, l'étape 104 de demande d'accès Wi-Fi à Internet s'achève et est suivie d'une étape 124 d'établissement effectif de l'accès Wi-Fi à Internet de la station cliente mobile 16 par l'intermédiaire du point d'accès sélectionné sur la base des paramètres IP configurés. Comme indiqué précédemment, pendant la connexion Wi-Fi obtenue lors de l'étape 124, des caractéristiques de performance du point d'accès sélectionné peuvent être mesurées et transmises à la base de données générale 14 pour une mise à jour.

Il apparaît clairement qu'un système pour l'établissement d'un accès à Internet par utilisation d'un protocole de communication sans fil en réseau informatique local à partir d'une station cliente mobile tel que celui décrit précédemment permet, grâce à son fonctionnement décrit précédemment également, de réduire substantiellement la durée d'une demande d'accès Wi-Fi à Internet. Alors que d'une manière générale un temps d'accès Wi-Fi est de l'ordre de 9 à 14 secondes, il peut être réduit à au plus 1,5 seconde, voire moins d'une seconde, grâce au système décrit précédemment.

Cet avantage est particulièrement important pour des applications ou la station cliente est très mobile, notamment lorsqu'elle est embarquée dans un véhicule automobile, puisqu'alors la durée d'une connexion Wi-Fi peut être très courte, notamment de l'ordre d'une ou de quelques dizaines de secondes en milieu urbain.

On notera par ailleurs que l'invention n'est pas limitée aux modes de réalisation décrits précédemment.

En particulier, l'invention s'applique à d'autres protocoles de communication sans fil en réseau informatique local que le Wi-Fi.

## Revendications

1. Procédé d'établissement d'un accès à Internet (10) par utilisation d'un protocole de communication sans fil en réseau informatique local à partir d'une station cliente mobile (16), par l'intermédiaire d'un point d'accès à choisir dans un ensemble de points d'accès (12) à Internet identifiés utilisant ce protocole, comportant les étapes suivantes :
- prévoir (100) une base de données générale (14) reprenant l'ensemble des points d'accès identifiés (12) avec des informations de connexion propres à chaque point d'accès,
- demander (104), par la station cliente mobile (16), un accès à Internet (10) par utilisation dudit protocole, en procédant successivement aux phases suivantes : parcours (106) d'au moins une partie des points d'accès identifiés (12) pour lister ceux détectés comme accessibles par la station cliente mobile (16) ; sélection (108) de l'un des points d'accès listés précédemment ; requête (110) d'une association de la station cliente mobile (16) au point d'accès sélectionné; authentification (112) de la station cliente mobile (16) auprès du point d'accès qui vient de lui être associé; configuration (114) de paramètres IP de la station cliente mobile (16),
- établir (124) l'accès à Internet (10) de la station cliente mobile (16) par l'intermédiaire du point d'accès sélectionné sur la base des paramètres IP configurés, et
- préalablement à l'étape (104) de demande de l'accès à Internet par utilisation dudit protocole et indépendamment de cette étape, téléchargement (102), par la station cliente mobile (16), des informations de connexion d'au moins une partie des points d'accès (12) de la base de données générale (14) dans une base de données embarquée (24) de la station cliente mobile (16),
**caractérisé en ce que** :
- les informations de connexion téléchargeables propres à chaque point d'accès identifié dans la base de données générale (14) comportent au moins une localisation ou couverture géographique du point d'accès considéré et des caractéristiques de performance du point d'accès considéré,
- la phase de parcours (106) se fait à partir des informations de localisations ou couvertures géographiques téléchargées préalablement dans la base de données embarquée (24) de la station cliente mobile (16) pour lister les points d'accès détectés comme accessibles par la station cliente mobile (16), sans sollicitation de la base de données générale (14) et des points d'accès identifiés (12), et
- la phase de sélection (108) se fait à partir des caractéristiques de performances téléchargées préalablement dans la base de données embarquée (24) de la station cliente mobile (16), sans sollicitation de la base de données générale (14) et des points d'accès identifiés (12).

2. Procédé d'établissement d'un accès à Internet (10) selon la revendication 1, dans lequel les informations de connexion propres à chaque point d'accès identifié dans la base de données générale (14) comportent en outre un canal de communication préféré du point d'accès considéré selon ledit protocole.

3. Procédé d'établissement d'un accès à Internet (10) selon la revendication 1 ou 2, dans lequel :
- les points d'accès identifiés (12) dans la base de données générale (14) sont répartis dans des classes prédéterminées dont le nombre est strictement inférieur au nombre de points d'accès identifiés,
- la phase de sélection (108) comporte la sélection d'une classe, puis la sélection d'un point d'accès de cette classe parmi les points d'accès listés à partir des informations de connexion téléchargées préalablement dans la base de données embarquée (24) de la station cliente mobile (16), et
- la sélection d'un point d'accès dans la classe sélectionnée se fait de façon aléatoire, pseudo-aléatoire ou sur la base d'informations de charges des points d'accès listés.

4. Procédé d'établissement d'un accès à Internet (10) selon l'une quelconque des revendications 1 à 3, comprenant en outre, lorsque l'accès à Internet (10) de la station cliente mobile (16) par l'intermédiaire du point d'accès sélectionné a été établi (124), les étapes suivantes :
- mesurer des caractéristiques de performance du point d'accès sélectionné sur la base de cet accès établi, et
- transmettre à la base de données générale (14) les caractéristiques de performance mesurées pour une mise à jour.

5. Procédé d'établissement d'un accès à Internet (10) selon l'une quelconque des revendications 1 à 4, dans lequel les phases d'authentification (112) et de configuration des paramètres IP (114) comportent l'utilisation de paramètres de temporisations qui sont définis de manière à toujours rester inférieurs ou égaux à 5 secondes, en particulier des temps de retours, dits temps de backoff et définis dans la phase de configuration des paramètres IP (114) de manière à rester en outre constants.

6. Procédé d'établissement d'un accès à Internet (10) selon l'une quelconque des revendications 1 à 5, dans lequel :
- la phase (114) de configuration des paramètres IP comporte elle-même quatre étapes : diffusion (116), puis proposition (118) d'adresse IP, puis requête (120) de l'adresse IP proposée, puis acquittement (122), et
- lors d'une première exécution de cette phase (114) de configuration des paramètres IP dans la demande d'accès (104), les deux premières étapes de diffusion (116) et de proposition (118) d'adresse IP ne sont pas exécutées, l'étape de requête (120) de l'adresse IP proposée étant basée sur une adresse IP accordée à l'occasion d'une demande d'accès précédente.

7. Procédé d'établissement d'un accès à Internet (10) selon l'une quelconque des revendications 1 à 6, dans lequel le protocole de communication sans fil en réseau informatique local est l'un de ceux normalisés par le groupe IEEE 802.11.

8. Procédé d'établissement d'un accès à Internet (10) selon l'une quelconque des revendications 1 à 7, dans lequel la configuration (114) des paramètres IP de la station cliente mobile se fait selon le protocole DHCP.

9. Programme d'ordinateur (28, 30) téléchargeable depuis un réseau de communication et/ou enregistré sur un support (26) lisible par ordinateur et/ou exécutable par un processeur, comprenant des instructions pour l'exécution des étapes suivantes d'un procédé d'établissement d'un accès à Internet (10) par utilisation d'un protocole de communication sans fil en réseau informatique local à partir d'une station cliente mobile (16), par l'intermédiaire d'un point d'accès à choisir dans un ensemble de points d'accès (12) à Internet identifiés utilisant ce protocole, lorsque ledit programme est exécuté sur un processeur (22) de ladite station cliente mobile (16) :
- demander (104), pour la station cliente mobile (16), un accès à Internet (10) par utilisation dudit protocole, en procédant successivement aux phases suivantes: parcours (106) d'au moins une partie des points d'accès identifiés (12) pour lister ceux détectés comme accessibles par la station cliente mobile (16) ; sélection (108) de l'un des points d'accès listés précédemment ; requête (110) d'une association de la station cliente mobile (16) au point d'accès sélectionné ; authentification (112) de la station cliente mobile (16) auprès du point d'accès qui vient de lui être associé ; configuration (114) de paramètres IP de la station cliente mobile (16),
- participer à un établissement (124) de l'accès à Internet (10) de la station cliente mobile (16) par l'intermédiaire du point d'accès sélectionné sur la base des paramètres IP configurés,
- préalablement à l'étape (104) de demande de l'accès Internet (10) par utilisation dudit protocole et indépendamment de cette étape, télécharger (102), pour la station cliente mobile (16), les informations de connexion d'au moins une partie des points d'accès (12) de la base de données générale (14) dans une base de données embarquée (24) de la station cliente mobile (16),
**caractérisé en ce qu'**il comporte en outre des instructions pour l'exécution des étapes suivantes :
- inclure dans lesdites informations de connexion téléchargeables propres à chaque point d'accès identifié dans la base de données générale (14) au moins une localisation ou couverture géographique du point d'accès considéré et des caractéristiques de performance du point d'accès considéré,
- procéder à la phase de parcours (106) à partir des informations de localisations ou couvertures géographiques téléchargées préalablement dans la base de données embarquée (24) de la station cliente mobile (16) pour lister les points d'accès détectés comme accessibles par la station cliente mobile (16), sans sollicitation de la base de données générale (14) et des points d'accès identifiés (12), et
- procéder à la phase de sélection (108) à partir des caractéristiques de performances téléchargées préalablement dans la base de données embarquée (24) de la station cliente mobile (16), sans sollicitation de la base de données générale (14) et des points d'accès identifiés (12).

10. Système pour l'établissement d'un accès à Internet (10) par utilisation d'un protocole de communication sans fil en réseau informatique local à partir d'une station cliente mobile (16), par l'intermédiaire d'un point d'accès à choisir dans un ensemble de points d'accès (12) à Internet identifiés utilisant ce protocole, le système comportant :
- une base de données générale (14), accessible par Internet (10), reprenant l'ensemble des points d'accès identifiés (12) avec des informations de connexion propres à chaque point d'accès,
- au moins une station cliente mobile (16) comportant un processeur (22) et :
• une base de données embarquée (24),
• un gestionnaire (28) de téléchargement, dans sa base de données embarquée (24), des informations de connexion d'au moins une partie des points d'accès (12) de la base de données générale (14),
• un gestionnaire (30) d'accès à Internet (10) programmé pour, lorsqu'il s'exécute, demander un accès à Internet (10) par utilisation dudit protocole, en procédant successivement aux phases suivantes : parcours (106) d'au moins une partie des points d'accès identifiés (12) pour lister ceux détectés comme accessibles par la station cliente mobile (16) ; sélection (108) de l'un des points d'accès listés précédemment; requête (110) d'une association de la station cliente mobile (16) au point d'accès sélectionné; authentification (112) de la station cliente mobile (16) auprès du point d'accès qui vient de lui être associé ; configuration (114) de paramètres IP de la station cliente mobile (16),
- un serveur Internet (20) programmé pour établir l'accès à Internet (10) de la station cliente mobile (16) par l'intermédiaire du point d'accès sélectionné sur la base des paramètres IP configurés,
le processeur (22) de la station cliente mobile (16) étant programmé pour séquencer les exécutions du gestionnaire de téléchargement (28) et du gestionnaire (30) d'accès à Internet (10) de manière à exécuter le gestionnaire de téléchargement (28) indépendamment de et préalablement à une exécution du gestionnaire (30) d'accès à Internet (10),
le système étant **caractérisé en ce que** :
- les informations de connexion téléchargeables propres à chaque point d'accès identifié dans la base de données générale (14) comportent au moins une localisation ou couverture géographique du point d'accès considéré et des caractéristiques de performance du point d'accès considéré, et
- le processeur (22) de la station cliente mobile (16) est en outre programmé pour exécuter le gestionnaire (30) d'accès à Internet (10) en procédant :
• à la phase de parcours (106) à partir des informations de localisations ou couvertures géographiques téléchargées préalablement dans la base de données embarquée (24) de la station cliente mobile (16) par le gestionnaire de téléchargement (28) pour lister les points d'accès détectés comme accessibles par la station cliente mobile (16), sans sollicitation de la base de données générale (14) et des points d'accès identifiés (12), et
• à la phase de sélection (108) à partir des caractéristiques de performances téléchargées préalablement dans la base de données embarquée (24) de la station cliente mobile (16) par le gestionnaire de téléchargement (28), sans sollicitation de la base de données générale (14) et des points d'accès identifiés (12).

## Patentansprüche

1. Verfahren zum Herstellen eines Internetzugangs (10) durch Verwendung eines Wireless Local Area Network-Kommunikationsprotokolls auf Grundlage einer mobilen Client-Station (16) mittels eines Zugangspunkts, der aus einem Satz von unter Verwendung dieses Protokolls identifizierten Internetzugangspunkten (12) auszuwählen ist, die folgenden Schritte umfassend:
- Vorsehen (100) einer allgemeinen Datenbank (14), die den Satz der identifizierten Zugangspunkte (12) mit Verbindungsinformationen beinhaltet, die jedem Zugangspunkt eigen sind,
- Anfragen (104) eines Internetzugangs (10) durch die mobile Client-Station (16) durch Verwendung des Protokolls, indem nacheinander die folgenden Phasen durchgeführt werden: Durchsuchen (106) mindestens eines Teils der identifizierten Zugangspunkte (12), um diejenigen aufzulisten, die von der mobilen Client-Station (16) als zugänglich erkannt werden; Auswählen (108) eines der vorher aufgelisteten Zugangspunkte; Anfordern (110) einer Verknüpfung der mobilen Client-Station (16) mit dem ausgewählten Zugangspunkt; Authentifizieren (112) der mobilen Client-Station (16) bei dem Zugangspunkt, der soeben mit ihr verknüpft wurde; Konfigurieren (114) von IP-Parametern der mobilen Client-Station (16),
- Herstellen (124) des Internetzugangs (10) der mobilen Client-Station (16) mittels des ausgewählten Zugangspunkts auf der Basis der konfigurierten IP-Parameter, und
- vor dem Schritt (104) des Anfragens des Internetzugangs durch Verwendung des Protokolls und unabhängig von diesem Schritt, Herunterladen (102) der Verbindungsinformationen mindestens eines Teils der Zugangspunkte (12) durch die mobile Client-Station (16) aus der allgemeinen Datenbank (14) in eine Onboard-Datenbank (24) der mobilen Client-Station (16),
**dadurch gekennzeichnet, dass**:
- die herunterladbaren Verbindungsinformationen, die jedem identifizierten Zugangspunkt in der allgemeinen Datenbank (14) eigen sind, mindestens einen Standort oder eine geographische Abdeckung des betreffenden Zugangspunkts und Leistungsmerkmale des betreffenden Zugangspunkts umfassen,
- die Phase des Durchsuchens (106) auf Grundlage der Standort- oder geographischen Abdeckungsinformationen erfolgt, die vorab in die Onboard-Datenbank (24) der mobilen Client-Station (16) heruntergeladen wurden, um die von der mobilen Client-Station (16) als zugänglich erkannten Zugangspunkte aufzulisten, ohne Beanspruchung der allgemeinen Datenbank (14) und der identifizierten Zugangspunkte (12), und
- die Phase des Auswählens (108) auf Grundlage der Leistungsmerkmale erfolgt, die vorab in die Onboard-Datenbank (24) der mobilen Client-Station (16) heruntergeladen wurden, ohne Beanspruchung der allgemeinen Datenbank (14) und der identifizierten Zugangspunkte (12).

2. Verfahren zum Herstellen eines Internetzugangs (10) nach Anspruch 1, wobei die Verbindungsinformationen, die jedem identifizierten Zugangspunkt in der allgemeinen Datenbank (14) eigen sind, weiter einen bevorzugten Kommunikationskanal des betreffenden Zugangspunkts nach dem Protokoll umfassen.

3. Verfahren zum Herstellen eines Internetzugangs (10) nach Anspruch 1 oder 2, wobei:
- die identifizierten Zugangspunkte (12) in der allgemeinen Datenbank (14) in vorbestimmte Klassen eingeteilt werden, deren Anzahl streng kleiner ist als die Anzahl identifizierter Zugangspunkte,
- die Phase des Auswählens (108) das Auswählen einer Klasse, anschließend das Auswählen eines Zugangspunkts dieser Klasse aus den Zugangspunkten umfasst, die auf Grundlage der vorab in die Onboard-Datenbank (24) der mobilen Client-Station (16) heruntergeladenen Verbindungsinformationen aufgelistet wurden, und
- das Auswählen eines Zugangspunkts in der ausgewählten Klasse zufällig, pseudo-zufällig oder auf der Basis von Auslastungsinformationen der aufgelisteten Zugangspunkte erfolgt.

4. Verfahren zum Herstellen eines Internetzugangs (10) nach einem der Ansprüche 1 bis 3, das, wenn der Internetzugang (10) der mobilen Client-Station (16) mittels des ausgewählten Zugangspunkts hergestellt (124) wurde, weiter die folgenden Schritte umfasst:
- Messen der Leistungsmerkmale des ausgewählten Zugangspunkts auf der Basis dieses hergestellten Zugangs, und
- Übertragen der gemessenen Leistungsmerkmale für eine Aktualisierung an die allgemeine Datenbank (14).

5. Verfahren zum Herstellen eines Internetzugangs (10) nach einem der Ansprüche 1 bis 4, wobei die Phasen des Authentifizierens (112) und des Konfigurierens der IP-Parameter (114) die Verwendung von Timing-Parametern umfassen, die so definiert sind, dass sie immer kleiner oder gleich 5 Sekunden bleiben, insbesondere Feedback-Zeiten, die als Backoff-Zeiten bezeichnet werden, und in der Phase des Konfigurierens der IP-Parameter (114) so definiert werden, dass sie des Weiteren konstant bleiben.

6. Verfahren zum Herstellen eines Internetzugangs (10) nach einem der Ansprüche 1 bis 5, wobei:
- die Phase (114) des Konfigurierens der IP-Parameter ihrerseits vier Schritte umfasst: Senden (116), anschließend Vorschlagen (118) einer IP-Adresse, anschließend Anfordern (120) der vorgeschlagenen IP-Adresse, anschließend Quittieren (122), und
- bei einer ersten Ausführung dieser Phase (114) des Konfigurierens der IP-Parameter in der Zugangsanfrage (104) die zwei ersten Schritte des Sendens (116) und des Vorschlagens (118) einer IP-Adresse nicht ausgeführt werden, wobei der Schritt des Anforderns (120) der vorgeschlagenen IP-Adresse auf einer IP-Adresse basiert, die anlässlich einer vorherigen Zugangsanfrage gewährt wurde.

7. Verfahren zum Herstellen einer Internetverbindung (10) nach einem der Ansprüche 1 bis 6, wobei das Wireless Local Area Network-Kommunikationsprotokoll eines derjenigen ist, die durch die IEEE-Gruppe 802.11 genormt sind.

8. Verfahren zum Herstellen eines Internetzugangs (10) nach einem der Ansprüche 1 bis 7, wobei das Konfigurieren (114) der IP-Parameter der mobilen Client-Station nach dem DHCP-Protokoll erfolgt.

9. Computerprogramm (28, 30), das aus einem Kommunikationsnetz heruntergeladen werden kann und/oder auf einem computerlesbaren Medium (26) aufgezeichnet ist und/oder von einem Prozessor ausgeführt werden kann, das Anweisungen umfasst zum Ausführen der folgenden Schritte eines Verfahrens zum Herstellen eines Internetzugangs (10) durch Verwendung eines Wireless Local Area Network-Kommunikationsprotokolls auf Grundlage einer mobilen Client-Station (16) mittels eines Zugangspunkts, der aus einem Satz von unter Verwendung dieses Protokolls identifizierten Internetzugangspunkten (12) auszuwählen ist, wenn das Programm auf einem Prozessor (22) der mobilen Client-Station (16) ausgeführt wird:
- Anfragen (104) eines Internetzugangs (10) für die mobile Client-Station (16) durch Verwendung des Protokolls, indem nacheinander die folgenden Phasen durchgeführt werden: Durchsuchen (106) mindestens eines Teils der identifizierten Zugangspunkte (12), um diejenigen aufzulisten, die von der mobilen Client-Station (16) als zugänglich erkannt werden; Auswählen (108) eines der vorher aufgelisteten Zugangspunkte; Anfordern (110) einer Verknüpfung der mobilen Client-Station (16) mit dem ausgewählten Zugangspunkt; Authentifizieren (112) der mobilen Client-Station (16) bei dem Zugangspunkt, der soeben mit ihr verknüpft wurde; Konfigurieren (114) von IP-Parametern der mobilen Client-Station (16),
- Mitwirken an einer Herstellung (124) des Internetzugangs (10) der mobilen Client-Station (16) mittels des ausgewählten Zugangspunkts auf der Basis der konfigurierten IP-Parameter,
- vor dem Schritt (104) des Anfragens des Internetzugangs (10) durch Verwendung des Protokolls und unabhängig von diesem Schritt, Herunterladen (102) der Verbindungsinformationen mindestens eines Teils der Zugangspunkte (12) für die mobile Client-Station (16) aus der allgemeinen Datenbank (14) in eine Onboard-Datenbank (24) der mobilen Client-Station (16),
**dadurch gekennzeichnet, dass** es weiter Anweisungen zum Ausführen der folgenden Schritte umfasst:
- Einschließen mindestens eines Standorts oder einer geographischen Abdeckung des betreffenden Zugangspunkts und der Leistungsmerkmale des betreffenden Zugangspunkts in die herunterladbaren Verbindungsinformationen, die jedem identifizierten Zugangspunkt in der allgemeinen Datenbank (14) eigen sind,
- Durchführen der Phase des Durchsuchens (106) auf Grundlage der Standort- oder geographischen Abdeckungsinformationen, die vorab in die Onboard-Datenbank (24) der mobilen Client-Station (16) heruntergeladen wurden, um die von der mobilen Client-Station (16) als zugänglich erkannten Zugangspunkte aufzulisten, ohne Beanspruchung der allgemeinen Datenbank (14) und der identifizierten Zugangspunkte (12), und
- Durchführen der Phase des Auswählens (108) auf Grundlage der Leistungsmerkmale, die vorab in die Onboard-Datenbank (24) der mobilen Client-Station (16) heruntergeladen wurden, ohne Beanspruchung der allgemeinen Datenbank (14) und der identifizierten Zugangspunkte (12).

10. System zum Herstellen eines Internetzugangs (10) durch Verwendung eines Wireless Local Area Network-Kommunikationsprotokolls auf Grundlage einer mobilen Client-Station (16) mittels eines Zugangspunkts, der aus einem Satz von unter Verwendung dieses Protokolls identifizierten Internetzugangspunkten (12) auszuwählen ist, wobei das System umfasst:
- eine über Internet (10) zugängliche allgemeine Datenbank (14), die den Satz der identifizierten Zugangspunkte (12) mit Verbindungsinformationen beinhaltet, die jedem Zugangspunkt eigen sind,
- mindestens eine mobile Client-Station (16), die einen Prozessor (22) umfasst, und:
-- eine Onboard-Datenbank (24),
-- einen Manager (28) zum Herunterladen der Verbindungsinformationen mindestens eines Teils der Zugangspunkte (12) aus der allgemeinen Datenbank (14) in ihre Onboard-Datenbank (24),
-- einen Internetzugangs-(10) Manager (30), der dafür programmiert ist, wenn er ausgeführt wird, einen Internetzugang (10) durch Verwendung des Protokolls anzufragen, indem er nacheinander die folgenden Phasen durchführt: Durchsuchen (106) mindestens eines Teils der identifizierten Zugangspunkte (12), um diejenigen aufzulisten, die von der mobilen Client-Station (16) als zugänglich erkannt werden; Auswählen (108) eines der vorher aufgelisteten Zugangspunkte; Anfordern (110) einer Verknüpfung der mobilen Client-Station (16) mit dem ausgewählten Zugangspunkt; Authentifizieren (112) der mobilen Client-Station (16) bei dem Zugangspunkt, der soeben mit ihr verknüpft wurde; Konfigurieren (114) von IP-Parametern der mobilen Client-Station (16),
- einen Internetserver (20), der dafür programmiert ist, den Internetzugang (10) der mobilen Client-Station (16) mittels des ausgewählten Zugangspunkts auf der Basis der konfigurierten IP-Parameter herzustellen,
wobei der Prozessor (22) der mobilen Client-Station (16) dafür programmiert ist, die Ausführungen des Download-Managers (28) und des Internetzugangs- (10) Managers (30) zu sequenzieren, um den Download-Manager (28) unabhängig von und vor einem Ausführen des Internetzugangs- (10) Managers (30) auszuführen,
wobei das System **dadurch gekennzeichnet ist, dass**:
- die herunterladbaren Verbindungsinformationen, die jedem identifizierten Zugangspunkt in der allgemeinen Datenbank (14) eigen sind, mindestens einen Standort oder eine geographische Abdeckung des betreffenden Zugangspunkts und Leistungsmerkmale des betreffenden Zugangspunkts umfassen, und
- der Prozessor (22) der mobilen Client-Station (16) weiter dafür programmiert ist, den Internetzugangs- (10) Manager (30) auszuführen unter Durchführen:
-- der Phase des Durchsuchens (106) auf Grundlage der Standort- oder geographischen Abdeckungsinformationen, die vorab durch den Download-Manager (28) in die Onboard-Datenbank (24) der mobilen Client-Station (16) heruntergeladen wurden, um die von der mobilen Client-Station (16) als zugänglich erkannten Zugangspunkte aufzulisten, ohne Beanspruchung der allgemeinen Datenbank (14) und der identifizierten Zugangspunkte (12), und
-- der Phase des Auswählens (108) auf Grundlage der Leistungsmerkmale, die vorab durch den Download-Manager (28) in die Onboard-Datenbank (24) der mobilen Client-Station (16) heruntergeladen wurden, ohne Beanspruchung der allgemeinen Datenbank (14) und der identifizierten Zugangspunkte (12).

## Claims

1. A method for establishing an Internet (10) access by using a wireless local area network communication protocol from a mobile client station (16), via an access point to be chosen from a set of identified Internet access points (12) using this protocol, comprising the following steps:
- a general database (14) containing all of the identified access points (12) with connection information specific to each access point is provided (100),
- the mobile client station (16) requests (104) Internet (10) access by using said protocol, successively moving through the following phases: browsing through (106) at least a portion of the identified access points (12) in order to list those detected as accessible by the mobile client station (16); selecting (108) one of the access points previously listed; requesting (110) an association of the mobile client station (16) with the selected access point; authenticating (112) the mobile client station (16) in the access point that was just associated with it; configuring (114) IP parameters of the mobile client station (16),
- the Internet (10) access of the mobile client station (16) is established (124) via the selected access point using the IP parameters configured, and
- before the step (104) of requesting the Internet access by using said protocol and independently of this step, the mobile client station (16) downloads (102) the connection information of at least a portion of the access points (12) of the general database (14) into an onboard database (24) of the mobile client station (16),
**characterized in that**:
- the downloadable connection information specific to each access point identified in the general database (14) comprises at least a location or geographic coverage area of the access point in question and performance characteristics of the access point in question,
- the phase of browsing through (106) is carried out on the basis of the information of location or geographic coverage previously downloaded in the onboard database (24) of the mobile client station (16) to list the access points detected as accessible by the mobile client station (16), without soliciting the general database (14) and the identified access points (12), and
- the phase of selecting (108) is carried out on the basis of the performance characteristics previously downloaded in the onboard database (24) of the mobile client station (16), without soliciting the general database (14) and the identified access points (12).

2. The method for establishing Internet (10) access according to claim 1, wherein the connection information specific to each identified access point in the general database (14) further comprises at least a preferred communication channel of the access point in question according to said protocol.

3. The method for establishing Internet (10) access according to claim 1 or 2, wherein:
- the identified access points (12) in the general database (14) are divided into predetermined classes, the number of which is strictly less than the number of identified access points,
- the selection phase (108) comprises the selection of a class, then the selection of an access point from this class among the access points listed on the basis of the previously downloaded connection information in the onboard database (24) of the mobile client station (16), and
- the selection of an access point in the selected class is done randomly, pseudo-randomly or on the basis of information on loads of the access points listed.

4. The method for establishing Internet (10) access according to any one of claims 1 to 3, further comprising, when the Internet (10) access of the mobile client station (16) via the selected access point has been established (124), the following steps:
- measuring performance characteristics of the selected access point on the basis of this established access, and
- transmitting the performance characteristics measured to the general database (14) for an update.

5. The method for establishing Internet (10) access according to any one of claims 1 to 4, wherein the phases of authentication (112) and of configuration of the IP parameters (114) involve the use of parameters of time outs that are defined in such a way as to always be less than or equal to 5 seconds, in particular times for returns, called backoff times and defined in the phase of configuring the IP parameters (114) in such a way as to further remain constant.

6. The method for establishing Internet (10) access according to any one of claims 1 to 5, wherein:
- the phase (114) of configuring the IP parameters itself comprises four steps: broadcasting (116), then proposing (118) an IP address, then requesting (120) the IP address proposed, then acknowledgement (122), and
- during the first execution of this phase (114) of configuring the IP parameters in the request for access (104), the two first steps of broadcasting (116) and proposing (118) an IP address are not carried out, the step of requesting (120) the proposed IP address being based on an IP address assigned during a previous request for access.

7. The method for establishing Internet (10) access according to any one of claims 1 to 6, wherein the wireless local area network communication protocol is one of the protocols normalized by the group IEEE 802.11.

8. The method for establishing Internet (10) access according to any one of claims 1 to 7, wherein the configuration (114) of the IP parameters of the mobile client station is carried out using the DHCP protocol.

9. A computer program (28, 30) that can be downloaded from a communication network and/or recorded on a medium (26) that can be read by a computer and/or executed by a processor, comprising instructions for the execution of the following steps of a method for establishing Internet (10) access by using a wireless local area network communication protocol from a mobile client station (16), via an access point to be chosen from a set of identified Internet access points (12) using this protocol, when said program is executed on a processor (22) of said mobile client station (16):
- requesting (104) Internet (10) access for the mobile client station (16) by using said protocol, by successively moving through the following phases: browsing through (106) at least a portion of the identified access points (12) in order to list those detected as accessible by the mobile client station (16); selecting (108) one of the access points previously listed; requesting (110) an association of the mobile client station (16) with the selected access point; authenticating (112) the mobile client station (16) in the access point that was just associated with it; configuring (114) IP parameters of the mobile client station (16),
- participating in establishment (124) of the Internet (10) access of the mobile client station (16) via the access point selected on the basis of the IP parameters configured,
- before the step (104) of requesting the Internet (10) access by using said protocol and independently of this step, downloading (102), for the mobile client station (16), the connection information of at least a portion of the access points (12) of the general database (14) into an onboard database (24) of the mobile client station (16),
**characterized in that** it further comprises instructions for the execution of the following steps:
- include in said downloadable connection information specific to each access point identified in the general database (14) at least a location or geographic coverage area of the access point in question and performance characteristics of the access point in question,
- carry out the phase of browsing through (106) on the basis of the information of location or geographic coverage previously downloaded in the onboard database (24) of the mobile client station (16) to list the access points detected as accessible by the mobile client station (16), without soliciting the general database (14) and the identified access points (12), and
- carry out the phase of selecting (108) on the basis of the performance characteristics previously downloaded in the onboard database (24) of the mobile client station (16), without soliciting the general database (14) and the identified access points (12).

10. A system for establishing an Internet (10) access by using a wireless local area network communication protocol from a mobile client station (16), via an access point to be chosen from a set of identified Internet access points (12) using this protocol, the system comprising:
- a general database (14), accessible via the Internet (10), containing all of the identified access points (12) with connection information specific to each access point,
- at least one mobile client station (16) comprising a processor (22) and:
• an onboard database (24),
• in its onboard database (24), a manager (28) of downloading of the connection information of at least a portion of the access points (12) in the general database (14),
• a manager (30) of Internet (10) access programmed to, when it is executed, request Internet (10) access by using said protocol, by successively moving through the following phases: browsing through (106) at least a portion of the identified access points (12) in order to list those detected as accessible by the mobile client station (16); selecting (108) one of the access points previously listed; requesting (110) an association of the mobile client station (16) with the selected access point; authenticating (112) the mobile client station (16) in the access point that was just associated with it; configuring (114) IP parameters of the mobile client station (16),
- an Internet server (20) programmed to establish the Internet (10) access of the mobile client station (16) via the access point selected on the basis of the IP parameters configured,
the processor (22) of the mobile client station (16) being programmed to sequence the execution of the download manager (28) and of the Internet (10) access manager (30) so as to execute the download manager (28) independently of and before execution of the Internet (10) access manager (30),
wherein the system is **characterized in that**:
- the downloadable connection information specific to each access point identified in the general database (14) comprises at least a location or geographic coverage area of the access point in question and performance characteristics of the access point in question, and
- the processor (22) of the mobile client station (16) is further programmed to execute the Internet (10) access manager (30) by moving through:
• the phase of browsing through (106) on the basis of the information of location or geographic coverage previously downloaded in the onboard database (24) of the mobile client station (16) by the download manager (28) to list the access points detected as accessible by the mobile client station (16), without soliciting the general database (14) and the identified access points (12), and
• the phase of selecting (108) on the basis of the performance characteristics previously downloaded in the onboard database (24) of the mobile client station (16) by the download manager (28), without soliciting the general database (14) and the identified access points (12).
